(19) **Europäisches Patentamt**

**European Patent Office**

**Office européen des brevets**

(11) **EP 0 957 345 B1**

(12) **EUROPEAN PATENT SPECIFICATION**

(45) Date of publication and mention
of the grant of the patent:
**13.11.2002 Bulletin 2002/46**

(51) Int Cl.⁷: **G01J 3/28**

(21) Application number: **99111903.3**

(22) Date of filing: **22.07.1993**

(54) **Methods and apparati for spectral imaging using interferometers of the Fabry-Perot type**

Verfahren und Vorrichtungen zur spektralen Abbildung mittels Fabry-Perot-Interferometern

Méthodes et dispositifs d'imagerie spectrale utilisant des interféromètres de type Fabry-Perot

(84) Designated Contracting States:
**DE ES FR GB IT**

(43) Date of publication of application:
**17.11.1999 Bulletin 1999/46**

(62) Document number(s) of the earlier application(s) in
accordance with Art. 76 EPC:
**93203737.7 / 0 767 361**

(73) Proprietor: **Applied Spectral Imaging Ltd.**
**10551 Migdal Haemek (IL)**

(72) Inventors:
• **Cabib, Dario**
**10505 Timrat (IL)**

• **Friedman, Zvi**
**27000 Kiryat Bialik (IL)**
• **Lipson, Stephen G.**
**Haifa (IL)**
• **Buckwald Robert A.**
**30095 Ishay (IL)**

(74) Representative: **Modiano, Guido, Dr.-Ing. et al**
**Modiano, Josif, Pisanty & Staub,**
**Baaderstrasse 3**
**80469 München (DE)**

(56) References cited:
**WO-A-90/07698**     **US-A- 3 702 735**
**US-A- 4 509 857**     **US-A- 4 976 542**

**Description**

FIELD AND BACKGROUND OF THE INVENTION

The present invention relates to a method and apparatus for spectral analysis of images, and particularly for analyzing an optical image of a scene to determine the spectral intensity of each pixel thereof. A spectrometer is an apparatus designed to accept light, to separate (disperse) it into its component wavelengths, and detect the spectrum. An imaging spectrometer is one which collects incident light from a scene and analyzes it to determine the spectral intensity of each pixel thereof.

The conventional imaging spectrometer includes a slit in the imaging plane for scanning the scene to be analyzed and focusing the scanned light on an array of detectors. When a two-dimensional detector array is used, one of the dimensions of the array is used to sample the different wavelengths associated with a single pixel, while the field of view is covered by a one-dimensional scanner and the remaining dimension of the array. When a one-dimensional detector array is used, the field of view is scanned mechanically in two directions, and all the detectors are used at any given time only to sample the different wavelengths of a single pixel. In both cases, the slit in the image plane ensures that each detector sees only the contribution of a single pixel at a single wavelength at any time; otherwise, it would be impossible to separate the spectra of each pixel.

However, conventional slit-type imaging spectrometers suffer from the disadvantage that most of the pixels of one frame are not measured at any given time, even though the fore optics of the spectrometer actually collects incident light from all of them simultaneously. Thus, the conventional slit-type technique is wasteful of the available information since, except for one wavelength, most of the radiation emitted by the measured pixel at any given time and reaching a particular detector are rejected. The result is that either a relatively large measurement time is required to obtain the necessary information with a given signal-to-noise ratio, or the signal-to-noise ratio (sensitivity) is substantially reduced for a given measurement time.

An object of the present invention is to provide a novel method and apparatus for spectral analysis of images which have advantages in the above respects.

More particularly, an object of the invention is to provide a method and apparatus for spectral analysis of images which better utilizes all the information available from the collected incident light of the image to substantially decrease the required frame time and/or to substantially increase the signal-to-noise ratio, as compared to the conventional "slit" type of imaging spectrometer.

SUMMARY OF THE INVENTION

According to the present disclosure, there is provided a method of analyzing an optical image of a scene to determine the spectral intensity of each pixel thereof, comprising: (a) collecting incident light from the scene; (b) passing the light through an interferometer which outputs modulated light corresponding to a predetermined set of linear combinations of the spectral intensity of the light emitted from each pixel; (c) focusing the light outputted from the interferometer on a detector array; and (d) processing the output of the detector array to determine the spectral intensity of each pixel thereof.

The method may be practiced by utilizing various types of interferometers, both of the moving type wherein the OPD (optical path difference) is varied to modulate the light by moving the entire interferometer or an element in the interferometer, as well as of the non-moving type wherein the OPD is varied with the angle of incidence of the incoming radiation. Thus, in the moving type interferometer, at each instant, each detector looks at a fixed point of the scene and its signal is a linear combination of the spectral content of the radiation emitted by it, which varies with time. When the scanner completes one scan of the interferometer, the scene will have been scanned at all relevant linear combinations of the spectral content. In the non-moving type interferometer, wherein the OPD varies with the angle of incidence of the incoming light, at each instant, each detector sees a different point of the scene and its signal is a different linear combination of the spectral content. When the scanner completes scanning one frame, the complete frame will have been scanned at all relevant linear combinations of the spectral content.

For purposes of illustration, the invention is described below as implemented by use of the Fabry-Perot and Michelson interferometers as examples of the moving-type interferometers, and as implemented by use of the Michelson and Sagnac interferometers as examples of the non-moving type interferometers.

The disclosure also provides apparatus for spectral analysis of images in accordance with the above method.

The methods and apparatus in accordance with the above features differ from the conventional slit-type imaging spectrometer by utilizing an interferometer as described above, instead of a grating or a prism, without limiting the collected energy with an aperture or slit, thereby substantially increasing the total throughput of the system. Such methods and apparatus thus better utilize all the information available from the incident light of the scene to be analyzed, thereby substantially decreasing the measuring time and/or substantially increasing the signal-to-noise ratio (sensitivity). This is achieved by the methods of claims 1 and 3 and the apparatus of Claims 5 and 7.

Consider, for example, the "whisk broom" design described in JohnB. Wellman, Imaging Spectrometers for Terrestrial and Planetary Remote Sensing, SPIE Proceedings, Vol. 750, p. 140 (1987).

Let n be the number of detectors in the linear array, m x m the number of pixels in a frame and T the frame time.

The total time spent on each pixel in one frame summed over all the detectors of the array is:

$$nT/m^2$$

By using the same size array and the same frame rate in a method according to the present invention, the total time spent summed over all the detectors on a particular pixel is the same, $nT/m^2$. However, whereas in the conventional grating or prism method the energy seen by every detector at any time is of the order of 1/n of the total because the wavelength resolution is 1/n of the range, in a method according to the present invention the energy is of the order of unity because the modulating function is a sinusoidal (Michelson) or similar periodic function (low finesse Airy function with Fabry-Perot) whose average over many periods is 50%. Based on the standard treatment of the Jacquinot advantage (or multiplex advantage) described in interferometry textbooks, it is possible to show that devices according to the present invention have measurement signal-to-noise ratios which are improved by a factor of $n^{0.5}$ in the infrared range (background limited performance) and by the square root of the ratio of the signal at a particular wavelength to the average signal in the spectral range, at wavelengths of a narrow peak in the visible range (signal photon noise limited performance). For a mathematical treatment and definition of the Fabry-Perot interferometer and a definition of the Airy Function, see Max Born and Emil Wolf, Principles of Optics, Pergamon Press, 1980, p. 329.

In all the embodiments of the invention described below, all the required optical phase differences are scanned simultaneously with the spatial scanning of the field of view in order to obtain all the information required to reconstruct the spectrum, so that the spectral information is collected simultaneously with the imaging information.

The invention can be used with many different optical configurations, such as a telescope for remote sensing, a microscope for laboratory analysis, fiber optics for industrial monitoring, and others. In addition, any wavelength range can be selected with appropriate filters and optics.

BRIEF DESCRIPTION OF THE DRAWINGS

The invention is herein described, by way of example only, with reference to the accompanying drawings, wherein:

FIG. 1 illustrates a conventional (prior art) slit-type imaging spectrometer;

FIG. 2 is a block diagram illustrating the main components of an imaging spectrometer constructed in accordance with the present disclosure;

FIG. 3 is a diagram illustrating an imaging spectrometer constructed in accordance with the present invention as claimed based on the use of a moving-type interferometer, namely, a Fabry-Perot interferometer with scanned thickness;

FIG. 4 illustrates a Michelson interferometer with retroreflectors used as a non-moving type interferometer in the imaging spectrometer of Fig. 2;

FIG. 5 is a diagram illustrating another moving-type interferometer, namely, a Michelson type interferometer, which may be used as the interferometer in the imaging spectrometer according to the present disclosure;

FIG. 6 illustrates another non-moving type interferometer, namely, a modified Sagnac interferometer, as used in an imaging spectrometer in accordance with the disclosure;

FIG. 6A illustrates yet another non-moving type interferometer, namely, a modified Sagnac interferometer, as used in an imaging spectrometer in accordance with the disclosure;

FIG. 7 schematically demonstrates that the rotation of a ray at the entrance to an interferometer such as that of Figures 6 and 6A also rotates the ray at the output by the same angle and changes the OPD between the corresponding split beams;

FIG. 8 schematically demonstrates that the same effect as demonstrated in Figure 7 can be achieved through the rotation of the interferometer;

FIG. 9 illustrates the invention as embodied in a modified Michelson imaging spectrometer, as an example of another moving type interferometer, with focusing on the mirrors through microscope objectives.

FIG. 10 shows a modified Sagnac interferometer as in Figures 6 and 6A but where the scanning is effected by a movable element of the interferometer;

FIG. 11 shows an interferometer as in Figures 6 and 6A, but with an additional optical plate made of a light transmitting material at 90° to the beamsplitter;

FIG. 12 shows an interferometer similar to that of Figure 11 but with a different orientation of the various components, the additional optical plate 138 is also at 90° to the beamsplitter;

FIG. 13 shows a Michelson-type interferometer similar to that shown in Figure 5 but with a two-dimensional detector array;

FIG. 14 shows a Sagnac interferometer as in Figure 1 but with a scanning mirror rather than a beamsplitter;

FIG. 15 is similar to Figure 14 except that the scanning mirror is single-sided.

## DESCRIPTION OF THE PREFERRED EMBODIMENTS

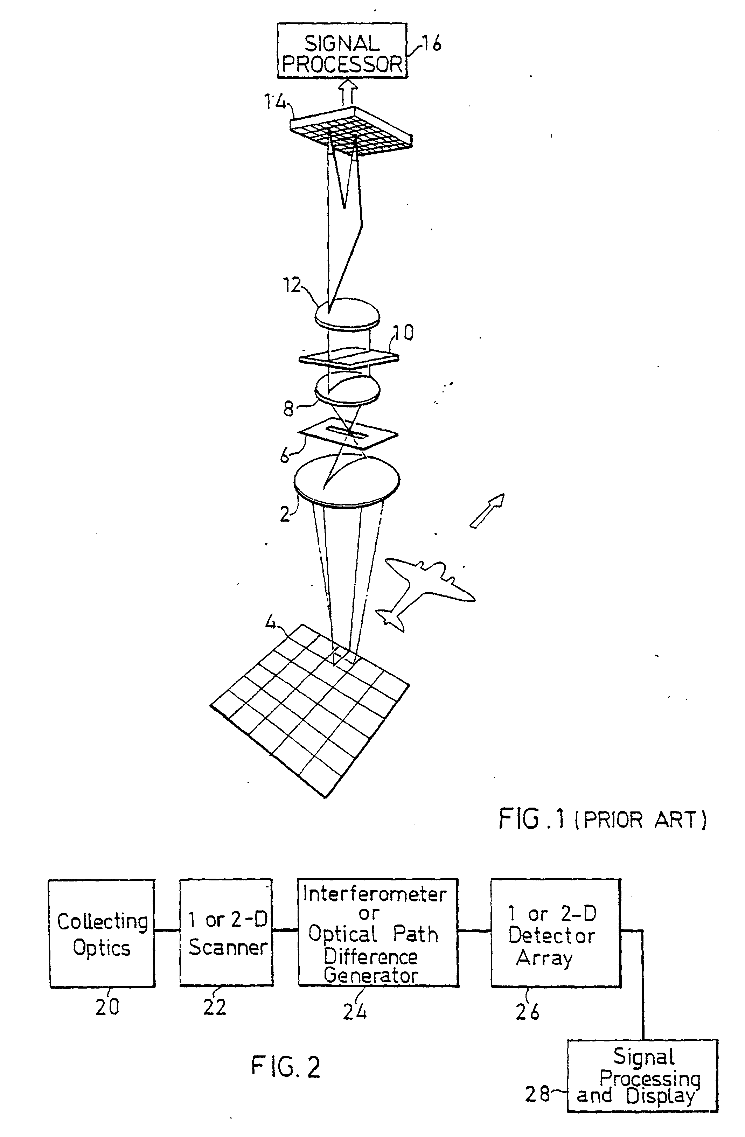

For purposes of better understanding the present invention, as illustrated in Figures 2-15 of the drawings, reference is first made to the construction and operation of a conventional (i.e., prior art) slit-type imaging spectrometer utilizing a two-dimensional array of detectors as illustrated in Figure 1.

Thus, the prior art slit-type imaging spectrometer as illustrated in Figure 1 comprises a collection optical system, such as a telescope as indicated at **2,** for collecting the incident light from the scene, schematically indicated at **4** and focusing the substantially parallel light of the scene onto a first focal plane occupied by a slit **6** to define the field of view. The light exiting from slit **6** is collimated in a collimator lens **8** and is passed through a transmission or reflection grating **10** to separate the various wavelengths. The output from grating **10** is focused by a focusing lens **12** onto a two-dimensional detector array **14** in a second focal plane. The output of detector array **14** is fed to a signal processor **16**.

In the two-dimensional array of detectors **14** illustrated in the prior art imaging spectrometer of Figure 1, the movement of the system (e.g., when embodied in an aircraft) effects the scanning along one dimension. The scanning along the second dimension is effected by the slit **6** which is oriented perpendicularly to the direction of movement of the system. The slit **6** thus assures that each detector within the array **14** sees only the contribution of one pixel at a single wavelength at any time; this is necessary to separate the spectra of each pixel.

As mentioned earlier, the disadvantage of the prior art method illustrated in Figure 1 is that most of the pixels of one frame are not measured at any given time even though the telescope (2 or other collecting optics) actually collects energy from all of them simultaneously. As a result, the required frame time is significantly increased, and/or the signal-to-noise ratio (sensitivity) is substantially decreased with respect to a system, if it existed, which did not have the need for such a slit.

Figure 2 is a block diagram illustrating the main components of an imaging spectrometer constructed in accordance with the present disclosure.

Thus, the imaging spectrometer of Figure 2 includes: a collection optical system, generally designated **20**; a one-dimensional or two-dimensional scanner, as indicated by block **22**; an optical path difference (OPD) generator or interferometer, as indicated by block **24**; a one-dimensional or two-dimensional detector array, as indicated by block **26**; and a signal processor and display, as indicated by block **28**.

Throughout it is intended that the radiation, such as light, to be analyzed can come from a wide variety of sources. For example, the source may emit radiation spontaneously or reflect or transmit radiation from a lamp or other illuminated object. In addition, with proper illumination, such as UV of laser, and with proper means of preventing the illuminating wavelengths from reaching the spectral imager, fluorescence or Raman spectral imaging measurements can be performed, in order to obtain different information about the object or objects in question in each case.

A critical element in the novel system is the optical path difference generator or interferometer **24**, which outputs modulated light corresponding to a predetermined set of linear combinations of the spectral intensity of the light emitted from each pixel of the scene to be analyzed. The output of the interferometer is focused onto the detector array **26**. Thus, all the required optical phase differences are scanned simultaneously with the spatial scanning of the field of view, in order to obtain all the information required to reconstruct the spectrum. The spectrum of all the pixels in the scene is thus collected simultaneously with the imaging information, thereby permitting analysis of the image in a real-time manner.

A method and apparatus according to the present disclosure may be practiced in a large variety of configurations. Specifically, the interferometer used may be of either the moving or the non-moving type and the detector array may, independently of the type of interferometer, be one- or two-dimensional. When the interferometer is of the moving type and the detector array is two-dimensional, no scanning is required, except for movement of the interferometer which is an OPD scan. When the interferometer is of the moving type and the detector array is one-dimensional, spatial scanning in one dimension is required. When the interferometer is of the non-moving type and the detector array is two-dimensional, OPD scanning in one dimension is required. When the interferometer is of the non-moving type and the detector array is one-dimensional, scanning in two dimensions is required, with one dimension relating to a spatial scan while the other relates to an OPD scan.

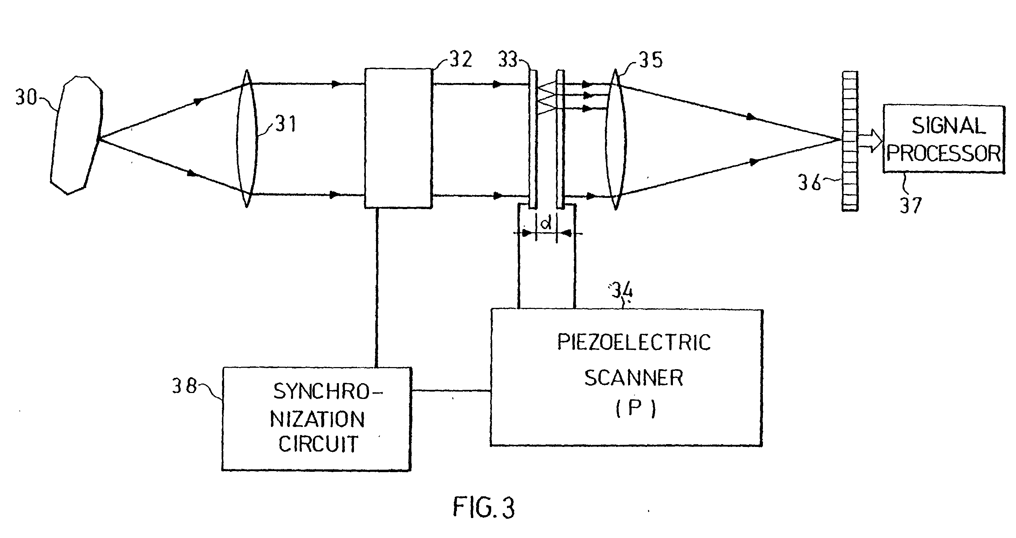

Figure 3 illustrates one form of imaging spectrometer constructed in accordance with the present invention as claimed. This spectrometer is based on the use of a moving type interferometer in which the OPD is varied to modulate the light, namely, a Fabry-Perot interferometer **33** with scanned thickness.

Thus, the imaging spectrometer illustrated in Figure 3 comprises a source or scene, generally designated **30**, to be analyzed to determine the spectral intensity of each pixel of the scene. The scene **30** may be a source of incoherent non-monochromatic radiation. It may be at a distance for remote-sensing applications, in which case the collection optical system, schematically indicated at **31**, would be a telescope; alternatively, the scene **30** may be close for microscopic analysis, in which case the collection optical system **31** would be a microscope.

Optical system **31** provides an output to a one-dimensional mechanical scanner, e.g., a mirror scanner as indicated at **32,** to scan the scene. The output from scanner **32** is fed to a Fabry-Perot interferometer **33** having an etalon made of two plane, parallel reflectors spaced at a distance "d" from each other. In this example, the spacing distance "d" is variable by using a mechanical scanner, in this case a piezoelectric scanner **34.**

The output from the Fabry-Perot interferometer **33** is fed through a refocusing optical system **35** onto a one-dimensional array of detectors **36** whose outputs are fed to a signal processor **37.** If a two-dimensional detector array is used, scanner **32** can be eliminated.

Optical system **31**, e.g., an afocal telescope or microscope, produces a substantially parallel beam (i.e., exactly parallel or having a very large F/No) at its output, because in this way every detector within the array **36** corresponds to a single optical phase difference through the etalon **34** of the Fabry-Perot interferometer **33.** The optical system **31** can be either refractive or reflective. The etalon **33** of the interferometer is at 90° to the optical axis of the system. It will be noted that no use is made of a field-of-view limiting aperture or slit.

The imaging spectrometer illustrated in Figure 3 operates as follows: A detector element i of the array **36** receives radiation from a beam which traverses the etalon **33** at a fixed angle ($\phi_i$) between its line of sight and the normal to the etalon, and therefore it sees this radiation always through an optical phase difference $\delta_i$, given by:

$$\delta_i = 2\pi \, 2d \, (n^2 - \sin^2\phi_i)^{0.5} \, / \, \lambda \qquad (1)$$

where $\lambda$ is the wavelength of the radiation considered, and n is the index of refraction of the air between the plates.

The total radiation reaching detector $i_k$ at any given time from a specific pixel k of the radiation input **30** is the convolution of that pixel's spectrum with the Airy function, as follows (Max Born and Emil Wolf, Principles of Optics, Pergamon Press, 1980, page 327):

$$I_{ik} = \int \{I_k(\lambda) \, / \, (1 + F \sin^2[\delta_i(\lambda)/2])\} \, d\lambda \qquad (2)$$

where the integration is between $\lambda_1$ and $\lambda_2$, and

$\lambda_1, \lambda_2$   = limits of the spectral range
$I_k(\lambda)$     = spectral intensity of the source at pixel k
F       = coefficient of finesse, is related to the reflectivity of the etalon R, by:

$$F = 4R \, / \, (1 - R)^2$$

$i_k$       = that particular detector which images pixel k through an optical phase difference $\delta_i(\lambda)$

Following is one of many ways of scanning the field of view and the thickness of the etalon **33.**

Suppose the array **36** is composed of a linear set of N detectors, whose signals can be monitored simultaneously and independently. Suppose scanner 32 performs a raster type scan of m lines (larger than N) and that the plane of the paper in Figure 3 is the vertical direction. Every time scanner 32 has scanned one horizontal line, the thickness "d" of the etalon **33** is incremented by the piezoelectric scanner **34** one step in synchronization with the vertical scanner **32** starting from d=0, until N lines are scanned, and N thickness steps are made. At this moment the etalon thickness is returned to the original value, and the thickness scanned again. The process is repeated until the scanner has scanned one complete frame.

Except for a marginal region of N pixels at the top and at the bottom of the field of view, all the pixels of the field of view are measured with N optical phase differences by different detectors. All the detector signals are sampled and recorded at a high rate, such that all the needed information is collected and fed to the signal processor **37** to reconstruct both the image and the spectra of all the pixels.

As mentioned above, another possible configuration is one which includes a two-dimensional array of detectors: in this case the same idea applies, but one spatial scan is saved.

For example, if the array is an N x m matrix in a "push broom" approach similar to that described on Page 142 of John B. Wellman, Imaging Spectrometers for Terrestrial and Planetary Remote Sensing, SPIE Proceedings, Vol. 750, p. 140 (1987), the N lines and m columns correspond to the same matrix in object space.

In this configuration, the Fabry-Perot thickness or optical phase difference is kept fixed for the time of integration of one line. Then the scanner performs a step vertically, and the Fabry-Perot thickness d is stepped in synchronization by one step, starting from zero, until N steps are performed. At this point the scanner continues scanning vertically, the thickness starts from zero again, and the steps are- repeated until the complete field of view is scanned.

In this way all the pixels are measured through all the optical phase differences, and the recorded information is processed to yield the spectra of every pixel.

The reconstruction of the spectrum of every pixel may be done by suitable mathematical processing, as follows:

One divides the spectral range of interest $\lambda_1$ to $\lambda_2$, into N intervals. If one approximates the integral of Equation (2) as a sum over N wavelength intervals, Equation (2) is the product of an N x N dimensional matrix given by:

$$A_{ij} = 1 / [1 + F \sin(2\delta_{ij}/2)] \tag{3}$$

and an N dimensional vector $I_k(\lambda_j)$, where j scans the N wavelength intervals, and k is a specific pixel in the field of view. If one inverts the matrix $A_{ij}$ and multiply it by the vector $I_{ik}$ ($i_k$=1, ... to n), one obtains the vector $I_k(\lambda_j)$ which is the spectrum of pixel k.

With respect to spectral resolution, consider two quasi monochromatic sources placed at the same pixel.

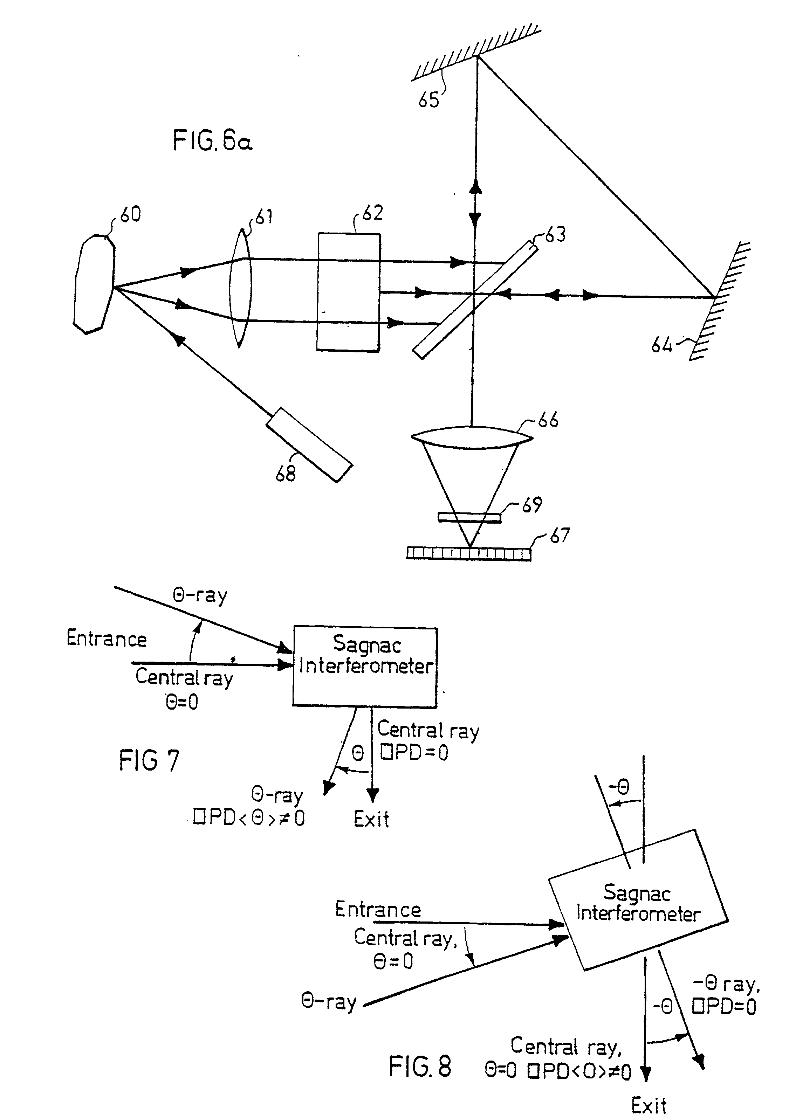

Preferably, the finesse F of the Fabry-Perot interferometer **33** is in the region around F=10, because (from Figure 7.58 of the above-cited Born and Wolf publication) one sees that in this case there is enough modulation in the Airy function, and that at the same time it does not yield very narrow lines. In fact, this configuration does not correspond to a very high wavelength resolution but it is necessary in order not to lose a significant amount of radiation between the narrow peaks of the Airy function. This is a desirable situation, since in any case, because of the imaging, a high resolution may yield too much information to handle.

The treatment of the resolution on Page 334 of the Born and Wolf publication still holds, because if one sets,

$$\sin(\in/4) = (\in/4) - 1/(F)^{0.5} = 1/0.3 \sim 0.3 \tag{4}$$

one sees that one makes an error of about 10% in approximating $\sin \in/4$ with $\in/4$.

So one has in this case,

$$\mathscr{F} = \pi/2 \, (F)^{0.5} = 5 \tag{5}$$

and the resolving power is,

$$\lambda/\Delta\lambda \sim 2 \, \mathscr{F} \, nd / \lambda \tag{6}$$

In order to get an idea of the order of magnitude, and check consistency, let it be assumed that,

$$N = 50 \text{ detectors in the array} \tag{7}$$

$$\Delta\lambda = 3\mu/50 = 0.06\mu \tag{8}$$

and,

$$\lambda = 2 \text{ to } 5\mu \tag{9}$$

Therefore, d is the range,

$$d = \lambda^2/\Delta\lambda \ (2 \ \mathscr{F} \ n)^{-1} \tag{10}$$

Taking n=1 for air, Equation (10) gives,

$$d = 10/(0.06 \times 10) = 16\mu \tag{11}$$

The range of d is such that it scans the same range of optical phase differences as the wavelength range; therefore,

$$d_2/\lambda_1 - d_1/\lambda_1 = d/\lambda_1 - d/\lambda_2 \tag{12}$$

or

$$d_2 - d_1 = d[1 - \lambda_1/\lambda_2] = 16 \times 0.3 = 5\mu \tag{13}$$

Therefore the thickness steps are of the order of,

$$5\mu/50 = 0.1\mu \tag{14}$$

In the 8 to 14μ spectral range one has,

$$\Delta\lambda = 6/50 = 0.12\mu \tag{15}$$

$$d = 11^2 / (0.12 \times 10) = 100\mu \tag{16}$$

and,

$$d_2 - d_1 = 100[1 - 8/14] = 43\mu \tag{17}$$

Therefore, the steps of thickness are of the order of 1μ. In the visible range 0.4 to 0.8μ, $\Delta\lambda = 0.008\mu$, and therefore,

$$d = 0.6^2 / (0.008 \times 10) = 4.5\mu \tag{18}$$

From (18)

$$d_2 - d_1 = 4.5[1 - 1/2] = 2.25\mu \tag{19}$$

and therefore the steps in d are

$$2/50 = 0.04\mu \tag{20}$$

In summary, the significant features in the system illustrated in Figure 3 include: i) the special matching of the interferometer thickness range and finesse, with the detector array size and number of detectors and the spectral resolution; and ii) the synchronization between the thickness scanning and the spatial scanning, to obtain the spectral and the spatial information simultaneously in the time one frame is built.

Many other scanning configurations may exist, which do not require synchronization. In such configurations the data-taking sequence will depend on the type of signal scanning of the detector array and on whether the detector array is one-dimensional or two-dimensional, as described above. It is intended that all such configurations fall within the scope of the present invention as claimed.

It will be seen when using the moving type interferometer as illustrated in Figure 3, a beam entering the interferometer at a small angle ($\phi \simeq 0$) to the optical axis undergoes an optical path difference which varies as $\phi^2$ or higher power of $\phi$. All the spectral information in all the pixels may be collected by scanning the optical path difference in synchronization with the scene scan, at the end of which, every pixel has been measured through all the optical path differences by different detectors. By careful bookkeeping and by applying the appropriate matrix inversion (such as Fourier transformation), the spectrum of every pixel may be calculated. The bookkeeping is needed because different detectors gather the information of different OPD's of one pixel at different times. Thus, in the time of 30 msec (the usual frame time of a standard video), a spectrum may be measured for every pixel of a standard video frame. This is of the order of 100 resolution points per pixel, with a typical matrix of 500 x 500 pixels per frame.

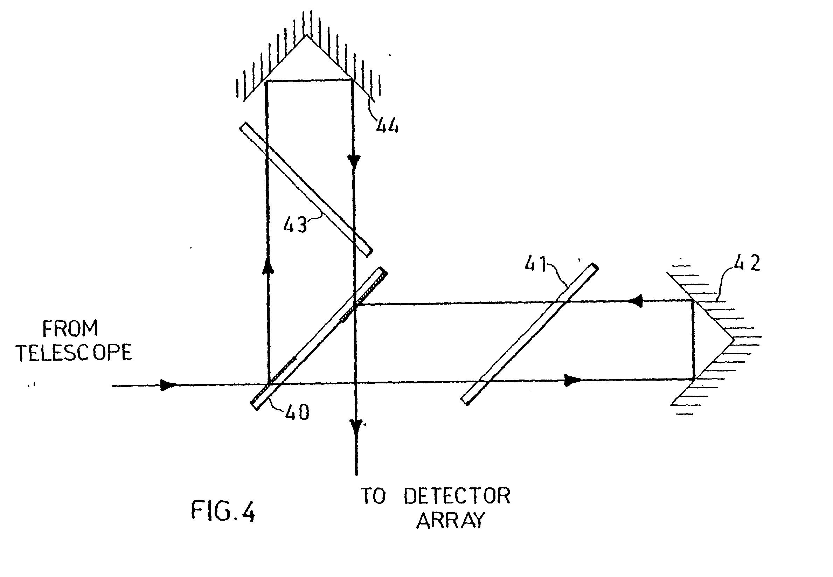

In the construction of Figure 4, instead of using a moving-type interferometer wherein the OPD (optical path difference) varies by moving an element in the interferometer (namely, changing the spacing d between the plate mirrors in the Fabry-Perot interferometer illustrated in Figure 3), the invention may also be implemented by using a non-moving type interferometer, in which case the OPD varies with the angle of incidence of the incoming radiation. Figure 4 illustrates the invention implemented by using the latter type interferometer, namely, by using a Michelson type interferometer.

Thus, the interferometer illustrated in Figure 4 includes a beamsplitter **40** receiving the beam from the optical collection system and scanner (**31** and **32,** respectively, Figure 3), and splitting the beam into two paths. Scanner **32** may be one-dimensional or two-dimensional, depending on whether detector array **36** is two-dimensional or one-dimensional, respectively. One path includes a compensator **41** and a retroreflector **42** while the second path includes a compensator **43** and a retroreflector **44**. The two compensators, **41** and **43,** are identical blocks of the same material and of the same thickness, and are positioned antisymmetrically in the two arms so that only beams which are parallel to the optical axis are compensated. The two retroreflectors, **42** and **44,** are positioned at equal distances from the beamsplitter **40**. The beamsplitter **40** has a half-reflecting coating only on a portion of its surface on each side so that the translation of the beam through the corner cube is exploited to obtain a completely compensated system for rays parallel to the optical axis.

Thus, in the Michelson type interferometer illustrated in Figure 4, the beam which is parallel to the optical axis of the system is compensated between the two arms of the interferometer, whereas the beams in directions which are off the optical axis of the system undergo OPD's (optical path differences) between the two arms which vary linearly with the incident angle. The differences are proportional to the angular deviation from the optical axis.

Therefore, when the collimated beams at the exit of the interferometer are focused on a detector array, such as array **36** in Figure 3, each element of the array will receive light which underwent different OPD's between the two arms.

Thus, with compensator **41** parallel to the beamsplitter **40,** and compensator **42** perpendicular to it, the optical path difference between the two arms can be shown to satisfy, for small $\phi$'s, the following relationship:

$$OPD(\phi) = 2d \sin \phi_0 \left[1 - \cos\phi_0/(n^2 - \sin^2\phi_0)^{0.5}\right] \phi \tag{21}$$

With $\phi_0$ = angle between the beamsplitter **40** and the optical axis. For simplicity $\phi_0$ can be taken as 45°, but this is not essential. n is the index of refraction of the two compensators, **41** and **43,** d is the compensator thickness, and $\phi$ is the angular deviation from the optical axis.

For example, if the required change in OPD between two adjacent detectors is $\sim 1\mu$, and the change in directions between the fields of view of two neighboring detectors is $\approx$ 1 mrad, d turns out to be of the order of 1 mm. In fact,

$$d = 1\mu / \{2(2)^{0.5}/2 \left[-1 - ((2)^{0.5}/2)/(4-1/2)^{0.5}\right) 10^{-3}\right] = 1 \text{ mm}$$

Note that if compensator **41** is removed and beamsplitter **40** is half-reflecting on the whole surface on the side of the incoming beam, then one obtains another viable configuration with a compensated optical axis.

With respect to the spectral resolution of the Figure 4 configuration, assume that the spectral range of the radiation reaching the detector is limited to,

$$\lambda_1 \leq \lambda \leq \lambda_2$$

by using a suitable filter, or because of the transmission properties of the optics.

Because of the Nyquist sampling theorem, in order to avoid aliasing, the interferogram must be sampled with OPD steps which are no larger than $\lambda_1/2$. For the purpose of illustration, one can assume that this is also the difference in OPD subtended by two adjacent detectors. Since one period is an OPD change of one wavelength, the maximum difference in OPD seen by two adjacent detector elements must be,

$$\lambda_1/2$$

Assume now that the incident radiation consists of two lines at wave numbers v and v+$\Delta$v with an intensity of $I_0$. The resultant intensity for an OPD of x is:

$$I(x) = 0.5I_0(1 + 2\cos 2\pi vx) + 0.5I_0(1 + 2\cos 2\pi(v + \Delta v))x) \tag{23}$$

If one subtracts the constant term, one obtains,

$$I(x) = I(x) - I_0$$

$$= I_0[\cos(2\pi vx) + \cos\pi(v + \Delta v)x]$$

$$= 2I_0 [2\pi(v + \Delta v) x] \cos \pi \Delta vx \tag{24}$$

Similar to the Rayleigh criterion, one defines the two line "resolved" if the ratio,

$$I(x)/I(0)$$

is lower than a predetermined amount, say 0.9. This gives a condition for the maximum value of x, $x_{max}$, needed to get the defined resolution.

The value of $x_{max}$ which satisfies the above condition is:

$$\cos\pi \Delta vx_{max} \leq 0.9 \tag{25}$$

or,

$$x_{max} \geq 0.143/\Delta v \tag{26}$$

Now let $N_d$ be the total number of the detectors in the array. Then:

$$x_{max} \geq N_d \lambda_1/2 \tag{27}$$

and,

$$N_d \, \lambda_1/2 = 0.143/\Delta v \qquad (28)$$

or,

$$\Delta v = 0.286/(\lambda_2 N_d) \qquad (29)$$

For $v_2 = 1/\lambda_1$

$$\Delta v/v_2 = \Delta v \, \lambda_2 = (0.286/N_d)(\lambda_1/\lambda_2)$$

As a numerical example:

$$\text{if } \lambda_1 = 5\mu m, \; \lambda_2 = 2\mu m \text{ and } N_d = 100$$

$$\Delta v/v_2 = 0.7\%$$

In summary, the uniqueness of the system illustrated in Figure 4 is represented by: i) the OPD is a linear function of the angle of incidence of the incoming radiation on the interferometer, so that different detectors of the array see it at different OPD's. This fact, combined with the spatial scanning and proper bookkeeping, allows the interferogram or Fourier transform of the spectrum of each pixel to be measured simultaneously with the image information. Again, the scanning in the case of a non-moving interferometer can be two-dimensional or one-dimensional, depending on whether the detector array is one-dimensional or two-dimensional, respectively.

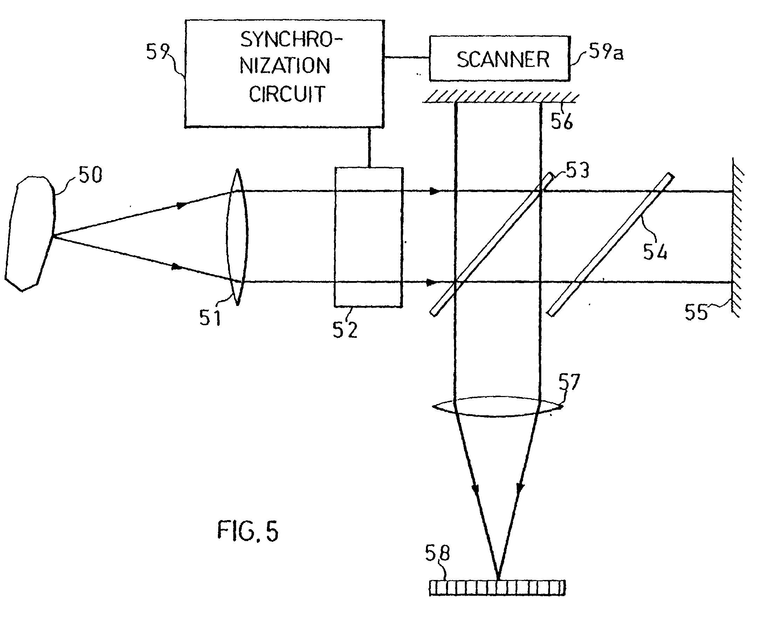

Figure 5 illustrates an imaging spectrometer including a Michelson interferometer but of the moving type, similar to that of Figure 3, namely, wherein the OPD varies with moving an element of the interferometer. In the spectrometer of Figure 5, the light from source **50** is collected by the optical collection system **51** and is collimated onto a scanning mirror **52** before being passed through the beamsplitter **53** which splits the beam into the two arms. One arm includes a compensator **54** and a mirror **55,** and the second arm includes merely a mirror **56**. The light from the two mirrors is passed via beamsplitter **53** and a focusing lens **57** onto an array of detectors **58.**

In the spectral imager illustrated in Figure 5, if the detector array is linear then the direction of the scanning is perpendicular to the direction of the linear array and the scanning mirror **52** scans the scene in one dimension. Scanner **52** is not needed if the detector array is two-dimensional. Scanner **59a** controls the distance between mirror **56** and beamsplitter **53**. By scanning mirror **56** in the way of the traditional Michelson interferometer, while mirror **55** is stationary, the OPD of the two arms is varied simultaneously for all pixels in the scene. The compensator **54** ensures that the central beam has an OPD equal to zero. Many different scanning configurations and sequences may be possible, including ones in which the synchronization is not needed while the image scanner is or is not needed, depending on the whether the detector array is one-dimensional or two-dimensional.

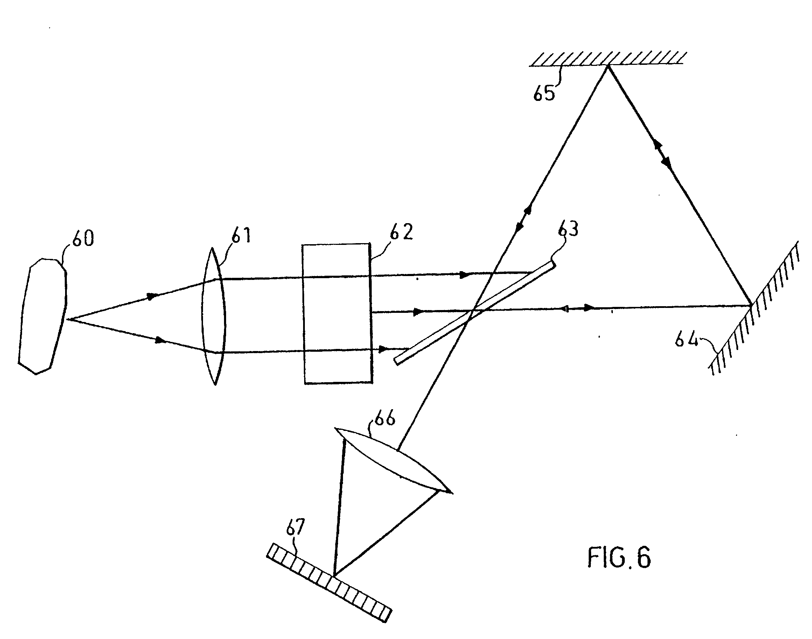

Figure 6 illustrates an imaging spectrometer constructed in accordance with the present invention but utilizing another type interferometer, namely, a modified Sagnac, of the non-moving type in that the OPD varies with the angle of incidence of the incoming radiation. As described above with respect to the imaging spectrometer illustrated in Figure 4, a beam entering the interferometer at a small angle to the optical axis undergoes an OPD which varies linearly with this angle.

The modified Sagnac interferometer illustrated in the spectrometer of Figure 6 is that described in D.E, Hecht, Optics, Addison-Wesley Publishing Company, p. 359 (1987). In this interferometer, all the radiation from source **60** in all the pixels, after being collimated by the optical collection system **61,** is scanned by a mechanical scanner **62.** The light is then passed through a beamsplitter **63** to a first reflector **64** and then to a second reflector **65,** which reflects the light back through the beamsplitter **63** and then through a focusing lens **66** to an array of detectors **67.** This beam interferes with the beam which is reflected by **63,** then by **65,** and finally by reflector **64.** With a one-dimensional array, a two-dimensional scan is required while with a two-dimensional detector array, only a one-dimensional scan is required.

At the end of one scan, every pixel has been measured through all the OPD's by different detectors at different times, and therefore the spectrum can be reconstructed by Fourier transformation. A beam parallel to the optical axis is compensated, and a beam at an angle ($\phi$) to the optical axis undergoes an OPD which is a function of the thickness of the beamsplitter **63**, its index of refraction, and the angle $\phi$. The OPD is proportional to $\phi$ for small angles. By applying the appropriate inversion, and by careful bookkeeping, the spectrum of every pixel is calculated.

Referring to Figure 6A, which shows a slightly modified version of the system of Figure 6, the beam, including the central beam on the optical axis and other parallel beams at non-zero angles with respect to it within the instrument's field of view, enters the interferometer and is split into two coherent beams by the beamsplitter **63.** The two split beams are rejoined after being folded by mirrors, **64** and **65,** and create interference patterns on the detector array **67** where they are focused by focusing lens **66.**

The various configurations described herein can be adapted, where necessary, to accommodate various types of illumination. Figure 6A can be used to illustrate this concept. For example, in the case of fluorescence radiation, a laser or UV lamp **68** is used to illuminate source **60.** The induced fluorescence spectrum emitted by source **60** is then measured by the spectral imager. It is to be noted that since in fluorescence the amount of emitted light is typically quite small compared to the incident light, a notch filter **69** is placed in front of detector array **67,** or in any other suitable location.

The function of notch filter **69** is to block the scattered or reflected radiation of the laser or lamp itself. The blocking is necessary to prevent the flooding of detector array **67** with undesired signals. The function of notch filter **69** can alternatively be fulfilled by any suitable type of filter which is capable of cutting off the reflected or scattered light from the lamp. In the case of a UV lamp, the lamp itself typically includes a cut-off filter which limits the spectral range of the light incident upon the sample. In addition, since the fluorescent light is usually weak, cooled or intensified detector arrays may be used to increase the signal to noise ratio of the measurement.

In Raman spectroscopy application the situation is as with fluorescence except that a laser **68** is used. The radiation source may be placed as in Figure 6A for reflection analysis. In the case of transmission analysis, the radiation source would be placed behind source **60,** i.e., to the left of source **60** in Figure 6A.

The scanning between the scene and the interferometer fringes can be performed either by using a scanner external to the interferometer (moving scene) or by rotating the interferometer itself (moving fringes). This can be better understood with reference to Figure 7 where it is seen that any ray, for example the central ray shown in the Figure, which is rotated by an angle θ at the entrance of the Sagnac interferometer, is rotated at the output by the same angle. However, the OPD between the corresponding split beams is changed.

Similarly, with reference to Figure 8, rotating the Sagnac interferometer by an angle θ leaves the outgoing beam fixed in space but changes the OPD by the same amount as before.

In the Sagnac configurations of Figure 6 and Figure 6A, the ray which is incident on the beamsplitter at an angle β (β = 60° in Figure 6 and 45° in Figure 6A) goes through the interferometer with an OPD = 0, whereas a ray which is incident at a general angle β - θ undergoes an OPD given by the following:

$$OPD(\beta,\theta,t,n) = t[(n^2-\sin^2(\beta+\theta))^{0.5} - (n^2-\sin^2(\beta-\theta))^{0.5}$$

$$+ 2\sin\beta\sin\theta] \tag{30}$$

where,

β =     is the angle of incidence of the ray on the beamsplitter ((60° in Figure 6 and 45° in Figure 6A)
θ =     the angular distance of a ray from the optical axis or Sagnac rotation angle with respect to the central position
t =     the thickness of the beamsplitter
n =     the index of refraction of the beamsplitter

Equation (30) may be approximated by the linear equation:

$$OPD(\beta,\theta,t,n) = 2t\sin\beta \; [1-(n^2-\sin2\beta)^{-0.5} \cos\beta] \; \theta \tag{31}$$

What follows is valid also for the configuration of Figure 4 and Equation (21).

It follows from Equation (30) that by scanning both positive and negative angles with respect to the central position, one can get a double-sided interferogram for every pixel, which helps eliminate phase errors giving more accurate results in the Fourier Transform calculation. The scanning amplitude determines the maximum OPD reached, which is related to the spectral resolution of the measurement. The size of the angular steps determines the OPD step which is, in turn, dictated by the shortest wavelength to which the system is sensitive. In fact, according to the Nyquist theorem, this OPD step must be smaller than half the shortest wavelength to which the system is sensitive.

Another parameter which should be taken into account is the finite size of a detector element in the matrix.

Through the focusing optics, the element subtends a finite OPD in the Sagnac interferometer which has the effect of convolving the interferogram with a rectangular function. This brings about, as a consequence, a reduction of system sensitivity at short wavelengths, which drops to zero for wavelengths equal to or below the OPD subtended by the element. For this reason, one must ensure that the Modulation Transfer Function (MTF) condition is satisfied, i.e., that the OPD subtended by a detector element in the interferometer must be smaller than the shortest wavelength at which the instrument is sensitive.

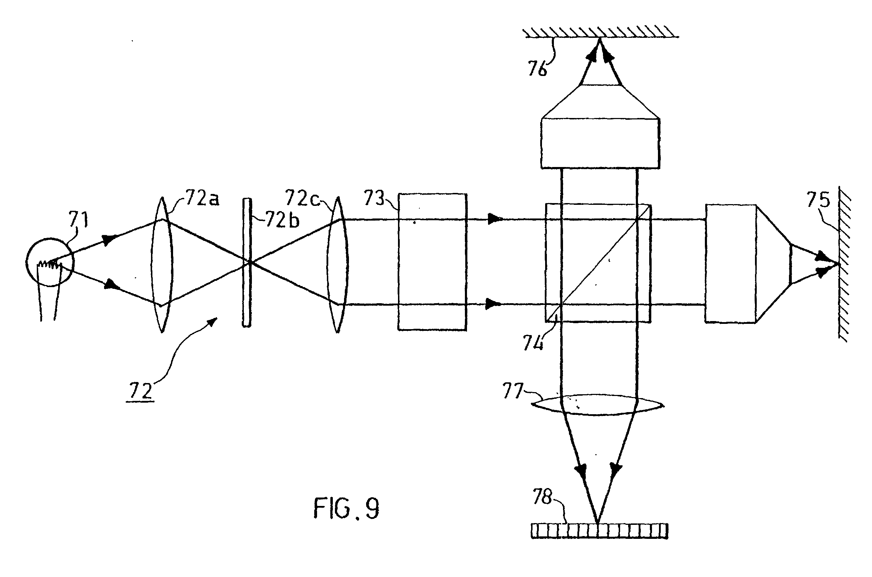

Figure 9 illustrates an additional imaging spectrometer including a Michelson interferometer of the moving type, similar to that illustrated in Figure 5, but constructed so that the light is focused on the reflectors through microscope objectives. Thus, the spectrometer illustrated in Figure 9 includes a light source **71** and a microscope optical system **72** including a condenser lens **72a,** for focusing on the object **72b**. Optical system **72** further includes a collimator lens **72c** for directing the light through a scanner **73,** through a beamsplitter **74** to the two reflectors, **75** and **76,** and then through a focusing 5 lens **77** onto a detector array **78.** The detector array **78** in configuration of Figure 9, as well as in the previously-described configurations, may be a CCD (charge coupled device).

The scanner **73** scans the field of view in one dimension if the detector array is one-dimensional. It is not needed at all if the detector array is two-0 dimensional. Reflector **75** and the microscope system move together along the optical axis to provide scanning of the OPD in synchronization with the scanner **73** (if present), as described above with respect to Figure 5.

As described above, the OPD for every pixel can be scanned in two ways:

(1) A fixed type interferometer is used, in which the interferometer is kept in a fixed position, and the scene is scanned with an optical scanner. Since each detector in the detector array sits in a position on the focal plane from which it sees the radiation through a fixed OPD, which OPD varies from detector to detector, scanning the scene ensures that each pixel is seen by all the detectors, and therefore through all the OPD's at the end of the scan. At the end of the scan, the Fourier Transformation can be applied to all the pixels; and

(2) A moving type interferometer is used; wherein the scene is kept fixed, and an element in the interferometer or the whole interferometer itself is scanned in such a way that now each detector always sees the same pixel, but through different OPD's at different times. At the end of the scan, all the pixels will have been measured through all the OPD's. The Fourier Transformation can therefore be applied to the signal function measured by every detector.

Where the detector is a linear array, a one-dimensional optical scan of the scene must be added to the interferometer scan, if the entire scene is to be analyzed. In the case of a line scanner (where the scene is a line instead of an area), no additional optical scan is needed, except for the interferometer, but there are many working configurations depending on the dimensionality of the detector array and the type of interferometer used.

The decision as to which method is preferable should be based in each case on the specific requirements and geometric limitations. For example, in method (1), the spectral resolution is limited by the number of detectors and by the total OPD range allowed by the geometry of the setup. In method (2), depending on the type of interferometer used, it is possible to reach very large OPD's. Since the spectral resolution attainable is higher when a higher maximum OPD is scanned, it is clear that the second method is more suitable when high resolution is required.

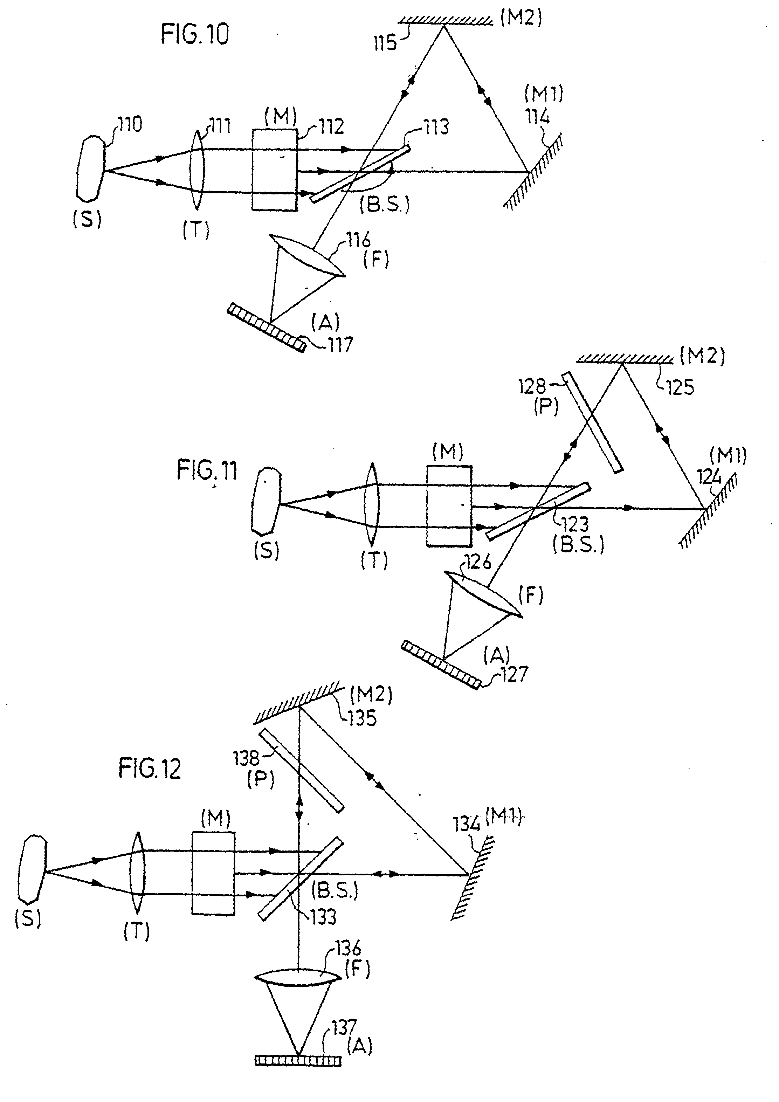

The embodiments of Figures 10-15 are based on the second method, namely, the one wherein the scene is fixed and the OPD scanning is effected by a movable element of the interferometer or the interferometer itself, and on a third method, which is based on a fixed interferometer with an additional compensating scanner mirror (single or double-sided), in order to keep the scene stationary, and scan the interference fringes across the scene. In the second and third methods, the light is passed through a moving type interferometer, in which the OPD is varied to modulate the light by moving an element of the interferometer or a compensating mirror, or the interferometer itself, such that at each instant, each detector sees a linear combination (Fourier transform) of the spectral content of the light emitted from each pixel, and it looks at a different pixel of the scene, and that when the scanner completes one scan, the complete scene will have been scanned at all relevant linear combinations of the spectral content.

In all these methods the scene must still be scanned in one dimension if the detector array is linear.

In the drawings, Figures 10-15 illustrate further implementations of the second method and two implementations of the third method, i.e. wherein the scene is kept fixed and the interference fringes scan the scene.

Figure 10 illustrates an imaging spectrometer of a type similar to the modified Sagnac interferometer illustrated in Figure 6, except that it is based on method (2) described above, namely, effecting the scanning by a movable element of the interferometer, rather than method (1) above, wherein scanning is effected by scanning the image.

Thus, the imaging spectrometer illustrated in Figure 10 is similar to that illustrated in Figure 6, in that it includes an optical image source 110 in which all the spectral information in all its pixels, after being collimated by the optical collection system **111,** is scanned by a mechanical scanner **112.** This scanner is needed only if the detector array is linear. If it is two-dimensional, it is not needed. The light is then passed through a beamsplitter **113** to a first reflector **114**, and then to a second reflector **115,** which reflects the light back through the beamsplitter **113** and then through a focusing lens **116** to a detector array **117.** In the apparatus illustrated in Figure 10, however, the beamsplitter **113** is rotated about an axis perpendicular to the optical path (and perpendicular to the paper) to effect the scanning. Thus, this rotation of the beamsplitter changes the OPD through which a collimated beam from a pixel reaches a specific detector, without changing the detector on which it is focused. It is thus clear that a scan of the beamsplitter angle with respect to the optical axis causes every pixel to be scanned through an OPD range.

Thus, in method (2) above (scanning being effected by the interferometer), when one looks at the focal plane where the detector is placed, one can see that the image of the scene is superimposed on a number of moving interference fringes, or alternates between dark and bright scene, depending on the type of interferometer. In method (1) above (the scene scanning method), one can see that, as the optical scanner moves, the image of the scene scans through the focal plane, while the fringes remain stationary on this plane. Therefore, each point on the scene goes through positions on the focal plane, which correspond to different OPD's. At the end of one scan, all the needed information is collected for each pixel. The results of the two methods are therefore similar, but the arrangements based on the second method, provide a number of advantages as described above.

Figure 11 illustrates an imaging spectrometer similar to that of Figure 10 above or to Figure 6, except that it includes an optical plate **128** of a light-transmitting material, which increases the maximum OPD, and thereby increases the spectral resolution of the apparatus. In this case, the optical plate **128** is located between the beamsplitter **123** and the second reflector **125,** which reflects the light from the first reflector **124** back through the beamsplitter **123** and then through a focusing lens **126** to the detector array **127.**

Figure 12 illustrates an imaging spectrometer very similar to that of Figure 11, except for a slightly different orientation of the first reflector **134**, the second reflector **135,** the optical plate **138,** the beamsplitter **133,** and the detector array **137** including its focusing lens **136.**

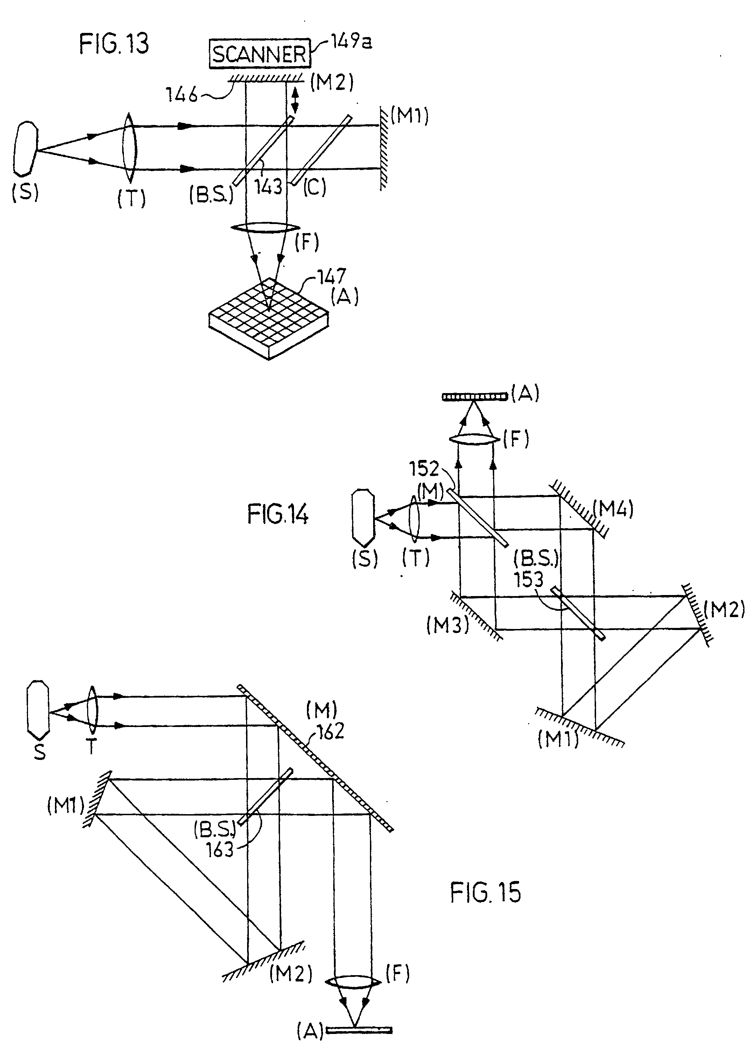

Figure 13 illustrates an imaging spectrometer including an interferometer of the Michelson type, similar to Figure 5. In this case, however, a two-dimensional detector array **147** is used, and therefore, a one-dimensional scanning is sufficient, rather than a two-dimensional scanning as in the apparatus illustrated in Figure 5. Thus, in Figure 13, the scanning is effected by mirror **146** controlled by scanner **149a,** to change the distance between the mirror and the beamsplitter **143,** and thereby to vary the OPD. Thus, the system illustrated in Figure 13 obviates the need for the synchronization circuit **59** and scanning mirror **52** included in Figure 5.

Figures 14 and 15 illustrate two further embodiments of the invention which provide advantages over the embodiment illustrated in Figure 10. Thus, in the apparatus illustrated in Figure 10, based on the Sagnac interferometer with rotating beamsplitter, the distance between fringes varies as a function of beamsplitter angle. This makes the transformation algorithm inconvenient and difficult to use. In the embodiments illustrated in Figures 14 and 15, however, the fringes scan the image without changing the distance between them. In this way, a constant fringe distance is attained, with the possibility of reaching higher spectral resolution and easier algorithm.

Figure 14 illustrates an apparatus based on the Sagnac interferometer including a scanning mirror **152** and a beamsplitter **153**. In this case, however, the scanning mirror **152,** rather than the beamsplitter **153,** is rotated about an axis perpendicular to the optical path (and perpendicular to the plane of the paper) to effect the scanning. As shown in Figure 14, mirror **152** is a double-sided mirror.

Figure 15 illustrates a similar arrangement as in Figure 14, except that the scanning mirror **162** is single-sided and is rotated, as mirror **152** in Figure 14, to effect the OPD scanning via the beamsplitter **163.**

In Figures 14 and 15 the interferometer is not moving, but it works as in the moving case because of the particular arrangement of the scanning mirrors.

Further variations, modifications and applications of the invention will be apparent.

It will thus be seen that imaging spectrometers constructed in accordance with the present disclosure do not merely measure the intensity of light coming from every pixel in the field of view, but also measure the spectrum of each pixel in a predefined wavelength range. They also better utilize all the radiation emitted by each pixel in the field of view at any given time, and therefore permit a significant decrease in the frame time and/or a significant increase in the sensitivity of the spectrometer. Such imaging spectrometers may include other types of interferometers and optical collection and focusing systems, and may be used in a wide variety of applications, including medical diagnostic applications, remote sensing for geological and agricultural investigations. and the like.

While the invention has been described with respect to a limited number of embodiments, it will be appreciated that many variations, modifications and other applications of the invention as claimed may be made.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

**Claims**

1. A method of analyzing an optical image of a scene to determine the spectral intensity of each pixel thereof, comprising:

   (a) collecting incident light from the scene;
   (b) passing the light through an interferometer which outputs modulated light corresponding to a predetermined set of linear combinations of the spectral intensity of the light emitted from each pixel;
   (c) focusing the light outputted from said interferometer on a two-dimensional detector array; and
   (d) processing the output of the detector array to determine the spectral intensity of each pixel thereof;

   said interferometer being of the low-finesse translating Fabry-Perot type in which the optical path difference is varied to modulate the light by translating an element of the interferometer, such that at each instant each detector sees a different point of the scene and its signal is a linear combination of the spectral content of the light coming from each pixel, and that when the scanner completes one interferometer scan, the scene will have been scanned at all relevant linear combinations of the spectral content.

2. The method of claim 1, wherein said collecting of said incident light is effected using a telescope.

3. A method of analyzing an optical image of a scene to determine the spectral intensity of each pixel thereof, comprising:

   (a) collecting incident light from the scene;
   (b) scanning said incident light in one dimension;
   (c) passing said scanned light through an interferometer which outputs modulated light corresponding to a predetermined set of linear combinations of the spectral intensity of the light emitted from each pixel;
   (d) focusing the light outputted from said interferometer on a one-dimensional detector array; and
   (e) processing the output of the detector array to determine the spectral intensity of each pixel thereof;

   said interferometer being of the low-finesse translating Fabry-Perot type in which the optical path difference is varied to modulate the light by translating an element of the interferometer, such that at each instant each detector sees a different point of the scene and its signal is a linear combination of the spectral content of the light emitted from each pixel, and that when the scanner completes one interferometer scan and one scene scan, the scene will have been scanned at all relevant linear combinations of the spectral content.

4. The method of claim 3, wherein said collecting of said incident light is effected using a telescope.

5. An apparatus for analyzing an optical image of a scene to determine the spectral intensity of each pixel thereof, comprising:

   (a) means for collecting incident light from the scene;
   (b) an interferometer;
   (c) means for passing the light through said interferometer such that it outputs modulated light corresponding to a predetermined set of linear combinations of the spectral intensity of the light emitted from each pixel;
   (d) a two-dimensional detector array;
   (e) means for focusing the light outputted from said interferometer on said detector array; and
   (f) means for processing the output of the detector array to determine the spectral intensity of each pixel thereof;

   said interferometer being of the low-finesse translating Fabry-Perot type in which the optical path difference is varied to modulate the light by translating an element of the interferometer, such that at each instant each detector sees a different point of the scene and its signal is a linear combination of the spectral content of the light coming from each pixel, and that when the scanner completes one interferometer scan, the scene will have been scanned at all relevant linear combinations of the spectral content.

6. The apparatus of claim 5, wherein said means for collecting said incident light from the scene includes a telescope.

7. An apparatus for analyzing an optical image of a scene to determine the spectral intensity of each pixel thereof, comprising:

(a) means for collecting incident light from the scene;
(b) means for scanning said collected light in one dimension;
(c) an interferometer;
(d) means for passing said scanned light through said interferometer such that it outputs modulated light corresponding to a predetermined set of linear combinations of the spectral intensity of the light emitted from each pixel;
(e) a one-dimensional detector array;
(f) means for focusing the light outputted from said interferometer on said detector array; and
(g) means for processing the output of the detector array to determine the spectral intensity of each pixel thereof;

said interferometer being of the low-finesse translating Fabry-Perot type in which the optical path difference is varied to modulate the light by translating an element of the interferometer, such that at each instant each detector sees a different point of the scene and its signal is a linear combination of the spectral content of the light emitted from each pixel, and that when the scanner completes one interferometer scan and one scene scan, the scene will have been scanned at all relevant linear combinations of the spectral content.

8. The apparatus of claim 7, wherein said means for collecting said incident light from the scene includes a telescope.

## Patentansprüche

1. Ein Verfahren zur Untersuchung eines optischen Bildes einer Szene, um die spektrale Intensität von jedem Pixel davon zu bestimmen, das folgendes umfasst:

(a) das Einsammeln von einfallendem Licht von der Szene;
(b) das Durchführen des Lichtes durch ein Interferometer, das moduliertes Licht ausgibt, das einem vorherbestimmten Satz von linearen Kombination der spektralen Intensität des Lichtes entspricht, das von jedem Pixel ausgestrahlt wird;
(c) das Bündeln des vom Interferometer ausgegebenen Lichtes auf eine zweidimensionale Detektormatrix; und
(d) das Verarbeiten der Ausgabe der Detektormatrix, um die spektrale Intensität von jedem Pixel davon zu bestimmen;

wobei das Interferometer des Translations-Fabry-Perot-Typs mit niedriger Feinheit ist, in dem die optische Wegdifferenz verändert wird, um das Licht zu modulieren, indem ein Element des Interferometers derart einer Translationsbewegung unterzogen wird, dass zu jedem Augenblick. jeder Detektor einen unterschiedlichen Punkt der Szene sieht und sein Signal eine lineare Kombination des spektralen Inhalts des Lichtes ist, das von jedem Pixel kommt, und wobei, wenn das Abtastgerät eine Interferometerabtastung durchführt, die Szene an allen relevanten linearen Kombinationen des spektralen Inhalts abgetastet sein wird.

2. Das Verfahren gemäß Anspruch 1, worin das Einsammeln des einfallenden Lichtes durchgeführt wird, indem ein Teleskop verwendet wird.

3. Ein Verfahren zur Untersuchung eines optischen Bildes einer Szene, um die spektrale Intensität von jedem Pixel davon zu bestimmen, das folgendes umfasst:

(a) das Einsammeln des einfallenden Lichtes von der Szene;
(b) das Abtasten des einfallenden Lichtes in einer Dimension;
(c) das Durchführen des abgetasteten Lichtes durch ein Interferometer, das moduliertes Licht ausgibt, das einem vorherbestimmten Satz von linearen Kombination der spektralen Intensität des Lichtes entspricht, das von jedem Pixel ausgestrahlt wird;
(d) das Bündeln des vom Interferometer ausgegebenen Lichtes auf eine eindimensionale Detektormatrix; und
(e) das Verarbeiten der Ausgabe der Detektormatrix, um die spektrale Intensität von jedem Pixel davon zu bestimmen;

wobei das Interferometer des Translations-Fabry-Perot-Typs mit niedriger Feinheit ist, in dem die optische Wegdifferenz verändert wird, um das Licht zu modulieren, indem ein Element des Interferometers derart einer Translationsbewegung unterzogen wird, dass zu jedem Augenblick jeder Detektor einen unterschiedlichen Punkt der Szene sieht und sein Signal eine lineare Kombination des spektralen Inhalts des Lichtes ist, das von jedem Pixel ausgestrahlt wird, und wobei, wenn das Abtastgerät eine Interferometerabtastung und eine Szenenabtastung durchführt, die Szene an allen relevanten linearen Kombinationen des spektralen Inhalts abgetastet sein wird.

4. Das Verfahren gemäß Anspruch 3, worin das Einsammeln des einfallenden Lichts durchgeführt wird, indem ein Teleskop verwendet wird.

5. Eine Vorrichtung zur Untersuchung eines optischen Bildes einer Szene, um die spektrale Intensität von jedem Pixel davon zu bestimmen, die folgendes umfasst:

(a) ein Mittel zum Einsammeln von einfallendem Licht von der Szene;
(b) ein Interferometer;
(c) ein Mittel zum Durchführen des Lichtes durch das Interferometer, so dass dieses moduliertes Licht ausgibt, daseinem vorherbestimmten Satz von linearen Kombination der spektralen Intensität des Lichtes entspricht, das von jedem Pixel ausgestrahlt wird;
(d) eine zweidimensionale Detektormatrix;
(e) ein Mittel zum Bündeln des vom Interferometer ausgegebenen Lichtes auf die Detektormatrix; und
(f) ein Mittel zum Verarbeiten der Ausgabe der Detektormatrix, um die spektrale Intensität von jedem Pixel davon zu bestimmen;

wobei das Interferometer des Translations-Fabry-Perot-Typs mit niedriger Feinheit ist, in dem die optische Wegdifferenz verändert wird, um das Licht zu modulieren, indem ein Element des Interferometers derart einer Translationsbewegung unterzogen wird, dass zu jedem Augenblick jeder Detektor einen unterschiedlichen Punkt der Szene sieht und sein Signal eine lineare Kombination des spektralen Inhalts des Lichtes ist, das von jedem Pixel kommt, und wobei, wenn das Abtastgerät eine Interferometerabtastung durchführt, die Szene an allen relevanten linearen Kombinationen des spektralen Inhalts abgetastet sein wird.

6. Die Vorrichtung gemäß Anspruch 5, worin das Mittel zum Einsammeln des einfallenden Lichtes von der Szene ein Teleskop einschließt.

7. Eine Vorrichtung zur Untersuchung eines optischen Bildes einer Szene, um die spektrale Intensität von jedem Pixel davon zu bestimmen, die folgendes umfasst:

(a) ein Mittel zum Einsammeln von einfallendem Licht von der Szene;
(b) ein Mittel zum Abtasten des eingesammelten Lichtes in einer Dimension;
(c) ein Interferometer;
(d) ein Mittel zum Durchführen des abgetasteten Lichtes durch das Interferometer, so dass dieses moduliertes Licht ausgibt, das einem vorherbestimmten Satz von linearen Kombination der spektralen Intensität des Lichtes entspricht, das von jedem Pixel ausgestrahlt wird;
(e) eine eindimensionale Detektormatrix;
(f) ein Mittel zum Bündeln des vom Interferometer ausgegebenen Lichtes auf die Detektormatrix; und
(g) ein Mittel zum Verarbeiten der Ausgabe der Detektormatrix, um die spektrale Intensität von jedem Pixel davon zu bestimmen;

wobei das Interferometer des Translations-Fabry-Perot-Typs mit niedriger Feinheit ist, in dem die optische Wegdifferenz verändert wird, um das Licht zu modulieren, indem ein Element des Interferometers derart einer Translationsbewegung unterzogen wird, dass zu jedem Augenblick jeder Detektor einen unterschiedlichen Punkt der Szene sieht und sein Signal eine lineare Kombination des spektralen Inhalts des Lichtes ist, das von jedem Pixel ausgestrahlt wird, und wobei, wenn das Abtastgerät eine Interferometerabtastung und eine Szenenabtastung durchführt, die Szene an allen relevanten linearen Kombinationen des spektralen Inhalts abgetastet sein wird.

8. Die Vorrichtung gemäß Anspruch 7, worin das Mittel zum Einsammeln des einfallenden Lichtes von der Szene ein Teleskop einschließt.

**Revendications**

1. Procédé d'analyse d'une image optique d'une scène pour déterminer l'intensité spectrale de chacun de ses pixels, comprenant:

(a) la collecte de la lumière incidente venant de la scène ;
(b) le passage de la lumière à travers un interféromètre qui fournit une lumière modulée correspondant à un ensemble prédéterminé de combinaisons linéaires de l'intensité spectrale de la lumière émise par chaque pixel ;
(c) la focalisation de la lumière sortant du dit interféromètre sur un réseau de détecteurs bidimensionnel ; et
(d) le traitement de la sortie du réseau de détecteurs pour déterminer l'intensité spectrale de chacun de ses pixels ;

le dit interféromètre étant du type Fabry-Perot à translation de faible finesse dans lequel on fait varier la différence de chemin optique pour moduler la lumière par translation d'un élément de l'interféromètre de sorte que, à chaque instant, chaque détecteur voit un point différent de la scène et son signal est une combinaison linéaire du contenu spectral de la lumière venant de chaque pixel, et de sorte que, lorsque le dispositif de balayage termine un balayage d'interféromètre, la scène a été analysée à toutes les combinaisons linéaires appropriées du contenu spectral.

2. Procédé selon la revendication 1, dans lequel la dite collecte de la dite lumière incidente est effectuée au moyen d'un télescope.

3. Procédé d'analyse d'une image optique d'une scène pour déterminer l'intensité spectrale de chacun de ses pixels, comprenant:

(a) la collecte de la lumière incidente venant de la scène ;
(b) le balayage de la dite lumière incidente dans une seule dimension ;
(c) le passage de la dite lumière balayée à travers un interféromètre qui fournit une lumière modulée correspondant à un ensemble prédéterminé de combinaisons linéaires de l'intensité spectrale de la lumière émise en provenance de chaque pixel ;
(d) la focalisation de la lumière sortant du dit interféromètre sur un réseau de détecteurs unidimensionnel ; et
(e) le traitement de la sortie du réseau de détecteurs pour déterminer l'intensité spectrale de chacun de ses pixels ;

le dit interféromètre étant du type Fabry-Perot à translation de faible finesse dans lequel on fait varier la différence de chemin optique pour moduler la lumière par translation d'un élément de l'interféromètre de sorte que, à chaque instant, chaque détecteur voit un point différent de la scène et son signal est une combinaison linéaire du contenu spectral de la lumière émise par chaque pixel, et de sorte que, lorsque le dispositif de balayage termine un balayage d'interféromètre et un balayage de scène, la scène a été analysée à toutes les combinaisons linéaires appropriées du contenu spectral.

4. Procédé selon la revendication 3, dans lequel la dite collecte de la dite lumière incidente est effectuée au moyen d'un télescope.

5. Appareil d'analyse d'une image optique d'une scène pour déterminer l'intensité spectrale de chacun de ses pixels, comprenant;

(a) des moyens de collecte de la lumière incidente venant de la scène ;
(b) un interféromètre ;
(c) des moyens de passage de la lumière à travers le dit interféromètre de sorte qu'il fournit une lumière modulée correspondant à un ensemble prédéterminé de combinaisons linéaires de l'intensité spectrale de la lumière émise provenant de chaque pixel ;
(d) un ensemble de détecteurs bidimensionnel ;
(e) des moyens de focalisation de la lumière sortant du dit interféromètre sur le dit ensemble de détecteurs ; et
(f) des moyens de traitement de la sortie du réseau de détecteurs pour déterminer l'intensité spectrale de chacun de ses pixels ;

le dit interféromètre étant du type Fabry-Perot à translation de faible finesse dans lequel on fait varier la différence de chemin optique pour moduler la lumière par translation d'un élément de l'interféromètre de sorte que, à chaque instant, chaque détecteur voit un point différent de la scène et son signal est une combinaison linéaire du contenu spectral de la lumière venant de chaque pixel, et de sorte que, lorsque le dispositif de balayage termine un balayage d'interféromètre, la scène a été balayée à toutes les combinaisons linéaires appropriées du contenu spectral.

**6.** Appareil selon la revendication 5, dans lequel les dits moyens de collecte de la dite lumière incidente venant de la scène comprennent un télescope.

**7.** Appareil d'analyse d'une image optique d'une scène pour déterminer l'intensité spectrale de chacun de ses pixels, comprenant:

(a) des moyens de collecte de la lumière incidente venant de la scène ;
(b) des moyens de balayage de la dite lumière collectée dans une seule dimension ;
(c) un interféromètre ;
(d) des moyens de passage de la dite lumière balayée à travers le dit interféromètre de sorte que celui-ci fournit une lumière modulée correspondant à un ensemble prédéterminé de combinaisons linéaires de l'intensité spectrale de la lumière émise venant de chaque pixel ;
(e) un réseau de détecteurs unidimensionnel ;
(f) des moyens de focalisation de la lumière sortant du dit interféromètre sur le dit réseau de détecteurs ; et
(g) des moyens de traitement de la sortie du réseau de détecteurs, pour déterminer l'intensité spectrale de chacun de ses pixels ;

le dit interféromètre étant du type Fabry-Perot à translation de faible finesse dans lequel on fait varier la différence de chemin optique pour moduler la lumière par translation d'un élément de l'interféromètre de sorte que, à chaque instant, chaque détecteur voit un point différent de la scène et son signal est une combinaison linéaire du contenu spectral de la lumière émise venant de chaque pixel, et de sorte que, lorsque le dispositif de balayage termine un balayage d'interféromètre et un balayage de scène, la scène a été analysée à toutes les combinaisons appropriées du contenu spectral.

**8.** Appareil selon la revendication 7, dans lequel les dits moyens de collecte de la dite lumière incidente venant de la scène comprennent un télescope.

FIG.1 (PRIOR ART)

FIG. 2

FIG.3

EP 0 957 345 B1

FIG.4

FIG.5

FIG.6

FIG.6a

60  61  62  63

65

64

68

66

69

67

θ-ray

Entrance

Central ray
θ=0

Sagnac
Interferometer

FIG 7

Central ray
ⵏPD=0

θ

θ-ray
ⵏPD<θ>≠0

Exit

-θ

Sagnac
Interferometer

Entrance

Central ray,
θ=0

θ-ray

-θ ray,
ⵏPD=0

-θ

Central ray,
θ=0 ⵏPD<0>≠0

FIG.8

Exit

FIG.9

FIG.10

FIG.11

FIG.12

FIG.13

SCANNER ~149a

(M2)

146~

(M1)

(S)    (T)    (B.S.)  143  (C)

(F)

147
(A)

(A)

(F)

152
(M)

(M4)

FIG.14

(B.S.)
153

(S)   (T)

(M3)                    (M2)

(M1)

(M)
162

S   T

(M1)

(B.S.)
163

FIG.15

(M2)

(F)

(A)